# EUROPEAN PATENT APPLICATION

(11) **EP 4 796 909 A1**
(43) Date of publication of application: **26.08.2026**
(21) Application number: 23955880.2
(22) Date of filing: 13.11.2023
(51) Int. Cl.: G01M 3/26, G01M 17/08

(54) **TRAIN AIRTIGHTNESS TESTING METHOD AND APPARATUS, ELECTRONIC DEVICE AND STORAGE MEDIUM**

(30) Priority: 17.10.2023 CN 202311345159
(71) Applicant: CRRC Changchun Railway Vehicles Co., Ltd., Changchun, Jilin 130000 (CN)
(72) Inventor: DU, Qinghua, Changchun, Jilin 130000 (CN); LI, Xuefei, Changchun, Jilin 130000 (CN); WANG, Yanfei, Changchun, Jilin 130000 (CN); GAO, Dengke, Changchun, Jilin 130000 (CN)
(74) Representative: Vogelbruch, Keang
(86) International application number: PCT/CN2023/131207
(87) International publication number: WO 2025/081562

(57) **Abstract**

A train airtightness testing method and apparatus (300), an electronic device (500) and a storage medium. The method comprises: on the basis of a relationship between an equivalent leakage area of a train to be subjected to testing and an equivalent leakage area of each of multiple vehicle components to be subjected to testing, determining an airtightness association relationship between a train to be assembled and each of the multiple vehicle components to be subjected to testing (S102); on the basis of a standard airtightness measure of the train to be assembled and factory parameters of each of the vehicle components to be subjected to testing, and in view of the airtightness association relationship, determining a predicted airtightness range of each of the vehicle components to be subjected to testing (S103); with reference to the predicted airtightness range of each of the vehicle components to be subjected to testing, using selected vehicle components to be assembled, which are configured for assembly, so as to perform assembly to obtain the train to be subjected to testing (S104); on the basis of an actual airtightness measure of the train to be subjected to testing, determining whether the train to be subjected to testing meets an airtightness standard (S106); and if so, determining that a train to be operated that can be tested and operated is obtained by means of assembly (S107). In this way, the airtightness measures of a plurality of vehicle components of a train can be planned, thereby improving the testing accuracy for the train.

## Description

### CROSS-REFERENCE TO RELATED APPLICATIONS

The present application claims priority to Chinese Patent Application No. 202311345159.2, entitled "TRAIN AIRTIGHTNESS TESTING METHOD AND APPARATUS, ELECTRONIC DEVICE AND STORAGE MEDIUM", filed with China National Intellectual Property Administration on October 17, 2023, the entire content of which is incorporated herein by reference.

### TECHNICAL FIELD

The present application relates to the technical field of train testing, and particularly to a method and apparatus for testing the airtightness of a train (a train airtightness testing method and apparatus), an electronic device and a storage medium.

### BACKGROUND

In order to improve the comfort performance under a pressure change inside a train during high-speed running of the train in a line and mitigate the impact of pressure waves inside the train on passengers and crew, the airtightness of the whole train can be improved by using some design methods, so as to strengthen the capability of the whole train to block propagation of pressure waves outside the train into the train. For example, when the train enters a tunnel at a high speed and runs in the tunnel, compression waves and expansion waves can alternately occur, so that an air pressure in the tunnel continuously changes violently. At this point, if a car has poor airtightness, the air pressure change is propagated into the train, leading to severe ear discomfort, dizziness, vomiting, and other symptoms for passengers, thereby compromising ride comfort and resulting in tunnel aerodynamic issues for the train.

In an existing airtightness testing solution, before components are mounted on the train, component-level tests are firstly performed to determine airtightness indices of the components, and then, after the components are mounted on the train, an actual train is directly tested, and the components that do not meet requirements are optimized. However, the method in which the airtightness test is directly performed on the whole train after the components are mounted on the train, an airtightness improvement solution is provided for the components that do not meet the requirements, and then the solution is applied to the whole train entails an excessively long testing cycle, a lack of market competitiveness and poor accuracy of the train airtightness testing.

### SUMMARY

In view of this, an object of the present application is to provide a method and apparatus for testing the airtightness of a train, an electronic device and a storage medium, which imposes specific airtightness index requirements on a plurality of vehicle components that affect the airtightness of the train, controls the airtightness index of the whole train, thereby eliminating the step of manufacturing a prototype train, saving time and cost, and improving the accuracy of the train airtightness testing.

An embodiment of the present application provides a method for testing the airtightness of a train, the testing method including:
analyzing a train structure of the train to be assembled and determining a plurality of vehicle components to be subjected to testing that affect the airtightness of the train in the train to be assembled;
determining, based on an equivalent leakage area relationship between a train to be subjected to testing and the plurality of vehicle components to be subjected to testing, an airtightness correlation relationship between the train to be assembled and the plurality of vehicle components to be subjected to testing;
determining, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing;
selecting, with reference to the predicted airtightness range of each of the vehicle components to be subjected to testing, vehicle components to be assembled for assembling the train to be subjected to testing, and using the vehicle components to be assembled for assembly to obtain the train to be subjected to testing;
testing an actual airtightness index of the train to be subjected to testing;
determining, based on the actual airtightness index, whether the train to be subjected to testing meets an airtightness standard; and
if yes, determining that the train to be subjected to testing that is obtained by assembly is a train to be operated, and testing and operating the train to be operated.

Further, after the determining whether the train to be subjected to testing meets an airtightness standard, the testing method further includes:
if no, determining, based on the actual airtightness index, the equivalent leakage area of the train to be subjected to testing;
determining, based on the equivalent leakage area and in combination with the factory parameters of each of the vehicle components to be subjected to testing, at least one vehicle component to be replaced that is airtightness-abnormal from the plurality of vehicle components to be subjected to testing; and
repeatedly testing the actual airtightness index of the train to be subjected to testing and replacing the at least one vehicle component to be replaced that is airtightness-abnormal, until the actual airtightness index of the train to be subjected to testing meets the airtightness standard, and obtaining the train to be operated.

Further, the equivalent leakage area of the train to be subjected to testing is determined by the following formula:
$\sqrt{\frac{{Δp}_{a}}{9.8}} - \sqrt{\frac{{Δp}_{b}}{9.8}} = 2 \frac{S}{V} {t}_{s} ;$
wherein S is the equivalent leakage area, V is a volume of the train, tₛ is a time difference before and after pressure release, and Δpₐ is an initial pressure difference; and Δp_{b} is a pressure difference after time tₛ.

Further, the determining, based on an equivalent leakage area relationship between a train to be subjected to testing and the plurality of vehicle components to be subjected to testing, an airtightness correlation relationship between the train to be assembled and the plurality of vehicle components to be subjected to testing includes:
determining, with reference to the equivalent leakage area relationship between each train to be subjected to testing and the plurality of vehicle components to be subjected to testing, that a negative correlation relationship exists between an airtightness index of the train to be assembled and an airtightness index of each of the vehicle components to be subjected to testing; and
establishing, based on the negative correlation relationship, the airtightness correlation relationship between the train to be assembled and the plurality of vehicle components to be subjected to testing.

Further, the correlation relationship is:
$\frac{1}{{τ}_{whole train}} = \frac{1}{{τ}_{1}} + \frac{1}{{τ}_{2}} + \frac{1}{{τ}_{3}} + ⋯ + \frac{1}{{τ}_{n}} ;$
wherein τ_{whole train} is the airtightness index of the train to be assembled, and τₙ is the airtightness index of the n^{th} vehicle component to be subjected to testing.

Further, the selecting, with reference to the predicted airtightness range of each of the vehicle components to be subjected to testing, vehicle components to be assembled for assembling the train to be subjected to testing includes;
selecting, with reference to the predicted airtightness range of each of the vehicle components to be subjected to testing and based on the factory parameters of each of the vehicle components to be subjected to testing, a plurality of candidate components; and
selecting, in combination with attribute parameter information of each of candidate components to be assembled, the vehicle components to be assembled from the plurality of candidate components to be assembled for assembling the train to be subjected to testing.

Further, the testing an actual airtightness index of the train to be subjected to testing includes:
determining, based on a standard airtightness index of the train to be subjected to testing, a predetermined high air pressure value and a predetermined low air pressure value;
controlling an air pressure value of the train to be subjected to testing to reach the high air pressure value by supplying pressurized air into the train to be subjected to testing;
testing a pressure reducing time taken when the air pressure value of the train to be subjected to testing is reduced from the high air pressure value to the low air pressure value; and
determining the actual airtightness index of the train to be subjected to testing based on the predetermined high air pressure value, the predetermined low air pressure value and the pressure reducing time.

An embodiment of the present application further provides an apparatus for testing the airtightness of a train, the testing apparatus including:
an analysis module configured to analyze a train structure of the train to be assembled and determine a plurality of vehicle components to be subjected to testing that affect the airtightness of the train in the train to be assembled;
a relationship determination module configured to determine, based on an equivalent leakage area relationship between a train to be subjected to testing and the plurality of vehicle components to be subjected to testing, an airtightness correlation relationship between the train to be assembled and the plurality of vehicle components to be subjected to testing;
a range determination module configured to determine, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing;
a component selection module configured to select, with reference to the predicted airtightness range of each of the vehicle components to be subjected to testing, vehicle components to be assembled for assembling the train to be subjected to testing, and use the vehicle components to be assembled for assembly to obtain the train to be subjected to testing;
an airtightness test module configured to test an actual airtightness index of the train to be subjected to testing;
a standard determination module configured to determine, based on the actual airtightness index, whether the train to be subjected to testing meets an airtightness standard; and
a test and operation module configured to determine, in response to the train to be subjected to testing meeting the airtightness standard, that the train to be subjected to testing that is obtained by assembly is a train to be operated, and test and operate the train to be operated.

Further, the testing apparatus further includes an abnormity replacement module, and after whether the train to be subjected to testing meets the airtightness standard is determined, the abnormity replacement module is configured to:
if no, determine, based on the actual airtightness index, the equivalent leakage area of the train to be subjected to testing;
determine, based on the equivalent leakage area and in combination with the factory parameters of each of the vehicle components to be subjected to testing, at least one vehicle component to be replaced that is airtightness-abnormal from the plurality of vehicle components to be subjected to testing; and
repeatedly test the actual airtightness index of the train to be subjected to testing and replace the at least one vehicle component to be replaced that is airtightness-abnormal, until the actual airtightness index of the train to be subjected to testing meets the airtightness standard, and obtain the train to be operated.

Further, the abnormity replacement module is configured to determine the equivalent leakage area of the train to be subjected to testing by the following formula:
$\sqrt{\frac{{Δp}_{a}}{9.8}} - \sqrt{\frac{{Δp}_{b}}{9.8}} = 2 \frac{S}{V} {t}_{s} ;$
wherein S is the equivalent leakage area, V is a train volume, tₛ is a time difference before and after pressure release, and Δpₐ is an initial pressure difference; and Δp_{b} is a pressure difference after time tₛ.

Further, when determining, based on an equivalent leakage area relationship between a train to be subjected to testing and the plurality of vehicle components to be subjected to testing, an airtightness correlation relationship between the train to be assembled and the plurality of vehicle components to be subjected to testing, the relationship determination module is configured to:
determine, with reference to the equivalent leakage area relationship between each train to be subjected to testing and the plurality of vehicle components to be subjected to testing, that a negative correlation relationship exists between an airtightness index of the train to be assembled and an airtightness index of each of the vehicle components to be subjected to testing; and
establish, based on the negative correlation relationship, the airtightness correlation relationship between the train to be assembled and the plurality of vehicle components to be subjected to testing.

Further, the correlation relationship is:
$\frac{1}{{τ}_{whole train}} = \frac{1}{{τ}_{1}} + \frac{1}{{τ}_{2}} + \frac{1}{{τ}_{3}} + ⋯ + \frac{1}{{τ}_{n}} ;$
wherein τ_{whole train} is the airtightness index of the train to be assembled, and τₙ is the airtightness index of the n^{th} vehicle component to be subjected to testing.

Further, when selecting, with reference to the predicted airtightness range of each of the vehicle components to be subjected to testing, vehicle components to be assembled for assembling the train to be subjected to testing, and using the vehicle components to be assembled for assembly to obtain the train to be subjected to testing, the component selection module is configured to:
select, with reference to the predicted airtightness range of each of the vehicle components to be subjected to testing and based on the factory parameters of each of the vehicle components to be subjected to testing, a plurality of candidate components; and
select, in combination with attribute parameter information of each of candidate components to be assembled, the vehicle components to be assembled from the plurality of candidate components to be assembled for assembling the train to be subjected to testing.

Further, when testing the actual airtightness index of the train to be subjected to testing, the airtightness test module is configured to:
determine, based on a standard airtightness index of the train to be subjected to testing, a predetermined high air pressure value and a predetermined low air pressure value;
control an air pressure value of the train to be subjected to testing to reach the high air pressure value by supplying pressurized air into the train to be subjected to testing;
test a pressure reducing time taken when the air pressure value of the train to be subjected to testing is reduced from the high air pressure value to the low air pressure value; and
determine the actual airtightness index of the train to be subjected to testing based on the predetermined high air pressure value, the predetermined low air pressure value and the pressure reducing time.

An embodiment of the present application further provides an electronic device, including: a processor, a memory and a bus, the memory storing machine-readable instructions executable by the processor, the processor and the memory being communicated through the bus when the electronic device runs, and the machine-readable instructions, when executed by the processor, performing the steps of the method for testing the airtightness of a train as described above.

An embodiment of the present application further provides a computer-readable storage medium having a computer program stored thereon, the computer program, when executed by a processor, performing the steps of the method for testing the airtightness of a train as described above.

The embodiments of the present application provide the method and apparatus for testing the airtightness of a train, the electronic device and the storage medium. The testing method includes: analyzing a train structure of the train to be assembled and determining a plurality of vehicle components to be subjected to testing that affect the airtightness of the train in the train to be assembled; determining, based on an equivalent leakage area relationship between a train to be subjected to testing and the plurality of vehicle components to be subjected to testing, an airtightness correlation relationship between the train to be assembled and the plurality of vehicle components to be subjected to testing; determining, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing; selecting, with reference to the predicted airtightness range of each of the vehicle components to be subjected to testing, vehicle components to be assembled for assembling the train to be subjected to testing, and using the vehicle components to be assembled for assembly to obtain the train to be subjected to testing; testing the actual airtightness index of the train to be subjected to testing; determining, based on the actual airtightness index, whether the train to be subjected to testing meets an airtightness standard; and if yes, determining that the train to be subjected to testing that is obtained by assembly is a train to be operated, and testing and operating the train to be operated.

Compared with the method in the prior art in which before components are mounted on the train, component-level tests are firstly performed to determine airtightness indices of the components, and then, after the components are mounted on the train, an actual train is directly tested, and the components that do not meet the requirements are optimized, by imposing specific airtightness index requirements on a plurality of vehicle components that affect the airtightness of a train, the airtightness index of the whole train is controlled, thereby eliminating the step of manufacturing a prototype train, saving time and cost, and improving the accuracy of the train airtightness testing.

In order to make the above mentioned objects, features, and advantages of the present application more apparent, preferred embodiments are described in detail hereinafter by referring to the drawings.

### BRIEF DESCRIPTION OF THE DRAWINGS

To describe the technical solutions in the embodiments of the present application more clearly, the following briefly describes the drawings required in the embodiments. It should be understood that the following drawings show merely some embodiments of the present application and therefore should not be considered as limiting the scope, and a person of ordinary skill in the art can still derive other related drawings from these drawings without creative efforts.
FIG. 1 is a flow chart of a method for testing airtightness of a train according to an embodiment of the present application;
FIG. 2 is a schematic diagram of an airtightness testing process of a train to be subjected to testing in the embodiment of the present application;
FIG. 3 is a first schematic structural diagram of an apparatus for testing the airtightness of a train according to an embodiment of the present application;
FIG. 4 is a second schematic structural diagram of an apparatus for testing the airtightness of a train according to the embodiment of the present application; and
FIG. 5 is a schematic structural diagram of an electronic device according to an embodiment of the present application.

### DETAILED DESCRIPTION OF THE EMBODIMENTS

To make the objectives, technical solutions and advantages of the embodiments of the present application clearer, the technical solutions in the embodiments of the present application are clearly and completely described with reference to the drawings in the embodiments of the present application. Apparently, the described embodiments are not all, but only a part of the embodiments of the present application. Generally, the components of the embodiments of the present application described and illustrated in the drawings herein can be arranged and designed in a variety of different configurations. Accordingly, the following detailed description of the embodiments of the present application provided in the drawings is not intended to limit the scope of protection of the present application, but only represents selected embodiments of the present application. All other embodiments obtained by those skilled in the art based on the embodiments of the present application without creative efforts shall fall within the protection scope of the present application.

Research shows that in an existing method for testing the airtightness of a train, before components are mounted on the train, component-level tests are firstly performed to determine airtightness indices of the components, and then, after the components are mounted on the train, an actual train is directly tested, and the components that do not meet requirements are optimized. However, the method in which the airtightness test is directly performed on the whole train after the components are mounted on the train, an airtightness improvement solution is provided for the components that do not meet the requirements, and then the solution is applied to the whole train entails an excessively long testing cycle, a lack of market competitiveness and poor accuracy of the train airtightness testing.

Based on this, an embodiment of the present application provides a method for testing the airtightness of a train, which imposes specific airtightness index requirements on a plurality of vehicle components that affect the airtightness of the train, controls the airtightness index of the whole train, thereby eliminating the step of manufacturing a prototype train, saving time and cost, and improving the accuracy of the train airtightness testing.

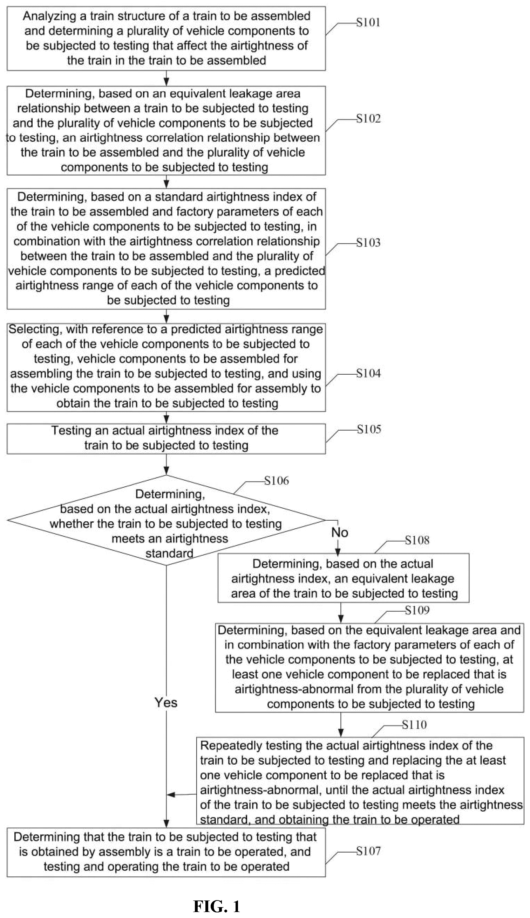

Referring to FIG. 1, FIG. 1 is a flow chart of a method for testing the airtightness of a train according to an embodiment of the present application. As shown in FIG. 1, the method for testing the airtightness of a train according to the embodiment of the present application includes:
S101: analyzing a train structure of a train to be assembled and determining a plurality of vehicle components to be subjected to testing that affect the airtightness of the train in the train to be assembled.

In this step, before the train is assembled, tested, and operated, firstly, a structural analysis needs to be performed on the train to be assembled based on multiple aspects such as overall airtightness requirements of the train, and specifications, types, and functional requirements of each component, so as to determine a plurality of vehicle components to be subjected to testing that affect the airtightness of the train in the train to be assembled during operation of the train to be assembled.

The plurality of vehicle components to be subjected to testing that affect the airtightness of the train in the train to be assembled at least include vehicle bodies, vehicle doors, vehicle windows, gangways, air conditioners, and waste discharge components.

S102: determining, based on an equivalent leakage area relationship between a train to be subjected to testing and the plurality of vehicle components to be subjected to testing, an airtightness correlation relationship between the train to be assembled and the plurality of vehicle components to be subjected to testing.

In this step, the equivalent leakage area refers to a representation of an equivalent leakage area of leakage gaps of the vehicle body of the train. When studying the airtightness of the train, it is direct and effective to evaluate the airtightness performance of a train using the magnitude of the equivalent leakage area. In addition, under an actual condition, a pressure outside the vehicle can be transmitted into the train interior through various irregular and complex gaps among various vehicle components, causing changes in the airtightness inside the vehicle. It can be seen that a certain relationship exists between the airtightness of the train and the equivalent leakage areas of various vehicle components. Therefore, an airtightness correlation relationship between the train to be assembled and the plurality of vehicle components to be subjected to testing can be established by utilizing the equivalent leakage area relationship between a train to be subjected to testing and the plurality of vehicle components to be subjected to testing.

The equivalent leakage area of the train to be subjected to testing is determined by the following formula:
$\sqrt{\frac{{Δp}_{a}}{9.8}} - \sqrt{\frac{{Δp}_{b}}{9.8}} = 2 \frac{S}{V} {t}_{s} ;$
wherein S is the equivalent leakage area, V is a volume of the train, tₛ is a time difference before and after pressure release, and Δpₐ is an initial pressure difference; and Δp_{b} is a pressure difference after time tₛ.

In an embodiment, the step S102 includes:
S1021: determining, with reference to the equivalent leakage area relationship between each train to be subjected to testing and the plurality of vehicle components to be subjected to testing, that a negative correlation relationship exists between an airtightness index of the train to be assembled and an airtightness index of each of the vehicle components to be subjected to testing.

Here, based on the basic assumption of the equivalent leakage area method, the leakage area of the whole train is determined as a sum of the leakage areas of the various components of the train:
${S}_{whole train} = {S}_{1} + {S}_{2} + … + {S}_{n} ,$
wherein S_{whole train} is the total equivalent leakage area of the train to be assembled, and Sₙ is the leakage area of the n^{th} vehicle component to be subjected to testing.

Here, according to a definition of the equivalent leakage area, an airtightness parameter and an equivalent area leakage ratio have a negative correlation relationship:
$S = a \frac{1}{τ} ,$
wherein τ is the airtightness parameter and a is a negative correlation coefficient.

S1022: establishing, based on the negative correlation relationship, an airtightness correlation relationship between the train to be assembled and the plurality of vehicle components to be subjected to testing.

In an embodiment, the correlation relationship is:
$\frac{1}{{τ}_{whole train}} = \frac{1}{{τ}_{1}} + \frac{1}{{τ}_{2}} + \frac{1}{{τ}_{3}} + ⋯ + \frac{1}{{τ}_{n}} ,$
wherein τ_{whole train} is the airtightness index of the train to be assembled as a whole, and τₙ is the airtightness index of the n^{th} vehicle component to be subjected to testing.

If one train has 5 components that affect the airtightness of the train, i.e., a vehicle body, a vehicle door, a gangway, an air conditioner and a waste discharge component, the airtightness indices thereof are τ_{vehicle body}, τ_{vehicle door}, τ_{gangway}, τₐᵢᵣ conditioner and τ_{waste discharge component}, respectively, and the airtightness index of the train to be assembled is τ_{whole train}, a relationship formula of the airtightness index of the train to be assembled and the airtightness indices of the 5 components that affect the airtightness of the train is as follows: $\frac{1}{{τ}_{whole train}} = \frac{1}{{τ}_{vehicle body}} + \frac{1}{{τ}_{vehicle door}} + \frac{1}{{τ}_{gangway}} + \frac{1}{{τ}_{air conditioner}} + \frac{1}{{τ}_{waste discharge component}} .$

S103: determining, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing.

In this step, the standard airtightness index of the train to be assembled can be designed by industry standards (IRIS and UIC) or according to requirements of customers, the factory parameters of each of the vehicle components to be subjected to testing are the airtightness index and a functional specification attribute thereof, and the predicted airtightness range of each of the vehicle components to be subjected to testing is determined according to the airtightness correlation relationship formula.

Here, the industry standards for the standard airtightness index are the requirements for a comfort standard of interior air pressure in a general train in the international railway industry standard (IRIS) and the international union of railways (UIC), and the customers can provide the standard airtightness parameter indices of target trains thereof, such as vehicle speed classes, opening states of vehicle doors and air conditioners, a release pressure range, and required times.

The standard airtightness index of the whole train can be designed according to actual requirements of the customer. For example, for a vehicle of a 120 km/h -140 km/h speed class, in a fully equipped state, with doors and external openings of air-conditioning equipment of a single car closed, the air pressure inside the car is reduced from 2100Pa to 1000Pa, and the time taken is not less than 12s. For another example, for a vehicle of a 160 km/h speed class, in a fully equipped state, with doors and external openings of air-conditioning equipment of a single car closed, the air pressure inside the car is reduced from 2600 Pa to 1000 Pa, and the time taken is no less than 15 s.

Specifically, for example, in an embodiment, the distribution of the airtightness indices of the various components is shown in the following table:

| Speed (km/s) | Test requirement (pressure) | Whole train (s) | Vehicle body (s) | Vehicle door (each pair) (s) | Gangway (s) | Air conditioner (s) | Waste discharge component (s) |
|---|---|---|---|---|---|---|---|
| 120-140 | 2100Pa-1000Pa | 12 | 500 | 360 | 60-65 | 280-300 | 280-300 |
| 160 | 2600Pa-1000Pa | 15 | 500 | 360 | 60 | 280-300 | 280-300 |

S104: selecting, with reference to a predicted airtightness range of each of the vehicle components to be subjected to testing, vehicle components to be assembled for assembling the train to be subjected to testing, and using the vehicle components to be assembled for assembly to obtain the train to be subjected to testing.

In this step, the predicted airtightness range of each vehicle component to be subjected to testing refers to a candidate component solution in which a plurality of candidate components selected based on the factory parameters of each vehicle component to be subjected to testing are used for the train to be assembled; and in combination with the structural analysis of the train to be assembled and the price and functional attributes in the factory parameters of the vehicle component to be subjected to testing, vehicle components to be assembled that are lower in cost and higher in applicability and generality are selected from the plurality of candidate components for assembling the train to be subjected to testing.

In an embodiment, the step S104 includes:
S1041: selecting, with reference to the predicted airtightness range of each of the vehicle components to be subjected to testing and based on the factory parameters of each of the vehicle components to be subjected to testing, a plurality of candidate components to be assembled.

In this step, the factory parameters of the vehicle component to be subjected to testing include: the airtightness index, the equivalent leakage area, the specification, the cost and the functional attribute. With reference to the predicted airtightness range of each of the vehicle components to be subjected to testing and based on the factory parameters of each of the vehicle components to be subjected to testing, the plurality of candidate components to be assembled with the airtightness indices within the predicted airtightness ranges are selected.

S1042: selecting, in combination with attribute parameter information of each of candidate components to be assembled, the vehicle components to be assembled from the plurality of candidate components to be assembled for assembling the train to be subjected to testing.

In this step, in combination with the attribute parameter information such as the airtightness index, the equivalent leakage area, the specification, the cost and functional attribute of each of candidate components to be assembled, vehicle components to be assembled that are lower in cost and higher in applicability and generality are selected from the plurality of candidate components for assembling the train to be subjected to testing.

Therefore, since the airtightness of the train is an index reflecting the sealing performance of a train, and the airtightness parameter index evaluates the airtightness of the train by analyzing changes of pressures outside and inside the train, and at the same time, improving the airtightness of the whole train can mitigate the impact of pressure waves inside the train on passengers and crew and enhance a comfort performance under the pressure change inside the train during high-speed running of the train on a line, testing of the airtightness index of the train is quite necessary.

S105: testing an actual airtightness index of the train to be subjected to testing.

In this step, after the train to be subjected to testing is obtained by assembly, in order to test whether the airtightness of the train to be subjected to testing meets an airtightness standard, the actual airtightness index of the train to be subjected to testing which is obtained by assembly is tested.

Here, testing of actual airtightness of the train is carried out after the train is in a fully equipped state, that is, after components such as a toilet, a water supply system, the vehicle window and the vehicle door are mounted in the train, and after all openings of the train that communicate with the outside, including openings of gangway doors and air-conditioning equipment, are closed, the actual airtightness of the train begins to be tested.

In an embodiment, the step S105 includes:
S1051: determining, based on a standard airtightness index of the train to be subjected to testing, a predetermined high air pressure value and a predetermined low air pressure value.

In this step, the airtightness test of the train to be subjected to testing is implemented by a pressure reducing method. Specifically, the airtightness of the train is reflected by measuring a pressure reducing time taken when the air pressure in the train is reduced from the high air pressure value to the low air pressure value, and therefore, when the proper high air pressure value and the proper low air pressure value are to be selected, it is necessary to determine the predetermined high air pressure value and the predetermined low air pressure value by analyzing the standard airtightness index of the train to be subjected to testing.

S1052: controlling an air pressure value of the train to be subjected to testing to reach the high air pressure value by supplying pressurized air into the train to be subjected to testing.

In this step, the air pressure value of the train to be subjected to testing is increased by supplying pressurized air into the train to be subjected to testing, so as to control the air pressure value of the train to be subjected to testing to exceed the determined predetermined high air pressure value.

S1053: testing a pressure reducing time taken when the air pressure value of the train to be subjected to testing is reduced from the high air pressure value to the low air pressure value.

In this step, after the air pressure value of the train to be subjected to testing exceeds the predetermined high air pressure value, the air pressure value of the train to be subjected to testing is tested in real time, and the pressure reducing time taken when the air pressure value of the train to be subjected to testing is reduced from the high air pressure value to the determined low air pressure value is recorded.

S1054: determining the actual airtightness index of the train to be subjected to testing based on the predetermined high air pressure value, the predetermined low air pressure value and the pressure reducing time.

In this step, a static airtightness parameter index is used as the airtightness parameter index of the train, and the static airtightness index τₛ is:
${τ}_{s} = \frac{{t}_{s}}{ln \left(\frac{{Δp}_{a}}{{Δp}_{b}}\right)} ,$
wherein tₛ is the time difference before and after pressure release, and Δpₐ is the initial pressure difference; Δp_{b} is the pressure difference after the time ts.

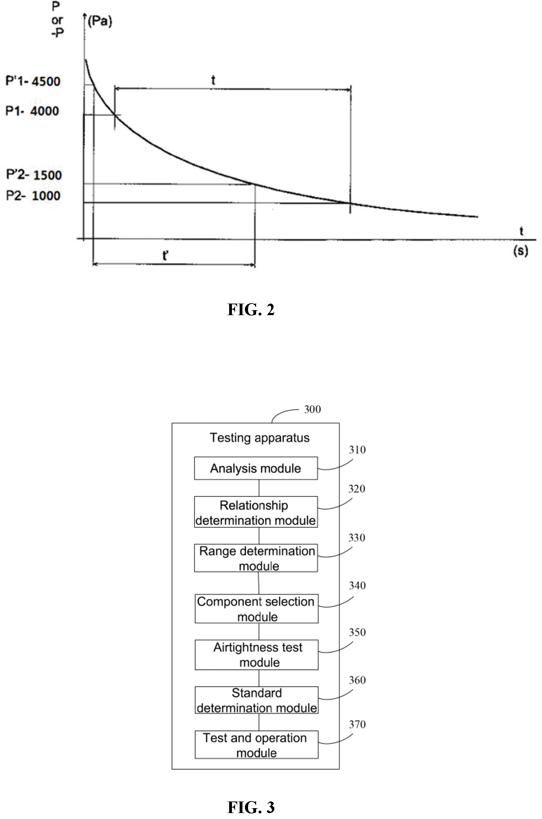

Specifically, referring to FIG. 2 for an example of testing the actual airtightness index of the train by the pressure reducing method, FIG. 2 is a schematic diagram of an airtightness testing process of the train to be subjected to testing according to the embodiment of the present application. As shown in FIG. 2, during the test, a single car equipped with a gangway bellows device between two cars is used, and sealing treatment is performed within a gangway range at both ends of the car; then, air is blown into the car by relevant equipment to make the pressure inside the car reach a level exceeding a predetermined high air pressure value of 4500 Pa, as shown by P'₁ in FIG. 2, and when the pressure inside the car drops to a level exceeding a predetermined low air pressure value of 1500 Pa, as shown by P'₂ in FIG. 2, timing begins. The pressure was reduced from a predetermined high air pressure value of 4000Pa to a predetermined low air pressure value of 1000Pa, as shown by P₁ and P₂ in FIG. 2, and a static airtightness index of the train was calculated according to a time required by this process in combination with the predetermined high air pressure value and the predetermined low air pressure value.

S106: determining, based on the actual airtightness index, whether the train to be subjected to testing meets an airtightness standard.

In this step, whether the train to be subjected to testing meets the airtightness standard is determined by calculating the actual static airtightness index of the train through the predetermined high air pressure value and the predetermined low air pressure value in the pressure reducing method and the measured time required by reducing the pressure from the predetermined high air pressure value to the predetermined low air pressure value, and comparing a result thereof with the standard airtightness index of the train to be assembled.

S107: if yes, determining that the train to be subjected to testing that is obtained by assembly is a train to be operated, and testing and operating the train to be operated.

In this step, if the train to be subjected to testing is determined to meet the airtightness standard, the train to be subjected to testing obtained by assembly can be determined to be the train to be operated, and it can be tested and operated.

Specifically, for example, an airtightness test result of an urban train is shown in the table below. Airtightness testing is performed on whole 160km/h urban trains after assembly, an actual measurement result of an urban train with 4 pairs of vehicle doors is 28s, an actual measurement result of an urban train with 2 pairs of vehicle doors is 48s, both results are higher than the requirement of the standard of 12s, and the trains to be subjected to testing meet the airtightness standard.

| Vehicle door | Speed (km/s) | Predetermined pressure (Pa) | Actual measurement result (s) | Urban train standard requirement |
|---|---|---|---|---|
| 2 pairs of vehicle doors | 160 | 2600-1000 | 48 | Not less than 12s |
| 4 pairs of vehicle doors | 160 | 2600-1000 | 28 | Not less than 12s |

In another embodiment, as shown in FIG. 1, after determining whether the train to be subjected to testing meets the airtightness standard, the testing method further includes:
S108: if no, determining, based on the actual airtightness index, an equivalent leakage area of the train to be subjected to testing.

In this step, according to the pressure reducing time and the predetermined pressure of the train to be subjected to testing measured by the pressure reducing method, in combination with a static airtightness calculation formula, the actual airtightness index is obtained, and the equivalent leakage area of the train to be subjected to testing is determined if the actual airtightness index does not meet the airtightness standard.

Here, the equivalent leakage area of the train to be subjected to testing is determined by the following formula:
$\sqrt{\frac{{Δp}_{a}}{9.8}} - \sqrt{\frac{{Δp}_{b}}{9.8}} = 2 \frac{S}{V} {t}_{s} ,$
wherein S is the equivalent leakage area, V is the volume of the train, tₛ is the time difference before and after pressure release, and Δpₐ is the initial pressure difference; Δp_{b} is the pressure difference after the time tₛ.

S109: determining, based on the equivalent leakage area and in combination with the factory parameters of each of the vehicle components to be subjected to testing, at least one vehicle component to be replaced that is airtightness-abnormal from the plurality of vehicle components to be subjected to testing.

In this step, based on the equivalent leakage area and in combination with the factory parameters of each of the vehicle components to be subjected to testing, the vehicle components to be replaced that are airtightness-abnormal are determined from the plurality of vehicle components to be subjected to testing, the test of the actual airtightness index of the train to be subjected to testing and the replacement of the at least one vehicle component to be replaced that is airtightness-abnormal are repeated until the actual airtightness index of the train to be subjected to testing meets the airtightness standard, and the train to be operated is obtained.

Here, the factory parameters of the vehicle component to be subjected to testing include: the airtightness index, the equivalent leakage area, the specification, the cost and the functional attribute; the vehicle components to be replaced that are airtightness-abnormal are determined according to the equivalent leakage area of the whole train in combination with the equivalent leakage area parameters of the vehicle components to be subjected to testing; and based on the specifications, cost, and functional attributes thereof, the replacement test is performed by selecting components with higher parameter standards.

S110: repeatedly testing the actual airtightness index of the train to be subjected to testing and replacing the at least one vehicle component to be replaced that is airtightness-abnormal, until the actual airtightness index of the train to be subjected to testing meets the airtightness standard, and obtaining the train to be operated.

In this step, the actual airtightness index of the train to be subjected to testing is repeatedly tested by using the pressure reducing method, and the at least one vehicle component to be replaced that is airtightness-abnormal selected when the actual airtightness index of the train to be subjected to testing does not meet the airtightness standard is repeatedly replaced, until the actual airtightness index of the train to be subjected to testing meets the airtightness standard, and then, the train to be subjected to testing obtained by assembly can be determined to be the train to be operated, and can be tested and operated.

In the method for testing the airtightness of a train according to the embodiments of the present application, the train structure of the train to be assembled is analyzed, and the plurality of vehicle components to be subjected to testing that affect the airtightness of the train in the train to be assembled are determined; based on an equivalent leakage area relationship between a train to be subjected to testing and the plurality of vehicle components to be subjected to testing, the airtightness correlation relationship between the train to be assembled and the plurality of vehicle components to be subjected to testing is determined; based on a standard airtightness index of the train to be assembled and the factory parameters of each of the vehicle components to be subjected to testing, and in combination with the airtightness correlation relationship between the train to be assembled and the plurality of vehicle components to be subjected to testing, the predicted airtightness range of each of the vehicle components to be subjected to testing is determined; with reference to the predicted airtightness range of each of the vehicle components to be subjected to testing, the vehicle components to be assembled for assembling the train to be subjected to testing are selected, and the vehicle components to be assembled are used for assembly to obtain the train to be subjected to testing; the actual airtightness index of the train to be subjected to testing is tested; based on the actual airtightness index, whether the train to be subjected to testing meets the airtightness standard is determined; and if yes, the train to be subjected to testing that is obtained by assembly is determined to be the train to be operated, and the train to be operated is tested and operated. Thus, by imposing specific airtightness index requirements on a plurality of vehicle components that affect the airtightness of a train, the airtightness index of the whole train is controlled, thereby eliminating the step of manufacturing a prototype train, saving time and cost, and improving the accuracy of the train airtightness testing.

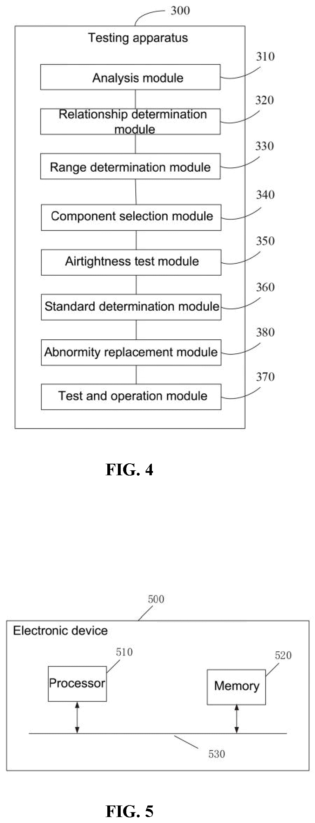

Referring to FIG. 3 and FIG. 4, FIG. 3 is a first schematic structural diagram of a apparatus for testing the airtightness of a train according to an embodiment of the present application, and FIG. 4 is a second schematic structural diagram of the apparatus for testing the airtightness of a train according to the embodiment of the present application. As shown in FIG. 3, the testing apparatus 300 includes:
an analysis module 310 configured to analyze a train structure of a train to be assembled and determine a plurality of vehicle components to be subjected to testing that affect the airtightness of the train in the train to be assembled;
a relationship determination module 320 configured to determine, based on an equivalent leakage area relationship between a train to be subjected to testing and the plurality of vehicle components to be subjected to testing, an airtightness correlation relationship between the train to be assembled and the plurality of vehicle components to be subjected to testing;
a range determination module 330 configured to determine, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing;
a component selection module 340 configured to select, with reference to a predicted airtightness range of each of the vehicle components to be subjected to testing, vehicle components to be assembled for assembling the train to be subjected to testing, and use the vehicle components to be assembled for assembly to obtain the train to be subjected to testing;
an airtightness test module 350 configured to test an actual airtightness index of the train to be subjected to testing;
a standard determination module 360 configured to determine, based on the actual airtightness index, whether the train to be subjected to testing meets an airtightness standard; and
a test and operation module 370 configured to determine, if the train to be subjected to testing meets the airtightness standard, that the train to be subjected to testing that is obtained by assembly is a train to be operated, and test and operate the train to be operated.

Further, as shown in FIG. 4, the testing apparatus further includes an abnormity replacement module 380, and after whether the train to be subjected to testing meets the airtightness standard is determined, the abnormity replacement module is configured to:
if no, determine, based on the actual airtightness index, the equivalent leakage area of the train to be subjected to testing;
determine, based on the equivalent leakage area and in combination with the factory parameters of each of the vehicle components to be subjected to testing, at least one vehicle component to be replaced that is airtightness-abnormal from the plurality of vehicle components to be subjected to testing; and
repeatedly test the actual airtightness index of the train to be subjected to testing and replace the at least one vehicle component to be replaced that is airtightness-abnormal, until the actual airtightness index of the train to be subjected to testing meets the airtightness standard, and obtain the train to be operated.

Further, when determining the equivalent leakage area of the train to be subjected to testing, the abnormity replacement module 380 is configured to:
determine the equivalent leakage area of the train to be subjected to testing by the following formula:
   $\sqrt{\frac{{Δp}_{a}}{9.8}} - \sqrt{\frac{{Δp}_{b}}{9.8}} = 2 \frac{S}{V} {t}_{s} ;$
wherein S is the equivalent leakage area, V is a volume of a train, tₛ is a time difference before and after pressure release, and Δpₐ is an initial pressure difference; and Δp_{b} is a pressure difference after time tₛ.

Further, when determining, based on an equivalent leakage area relationship between a train to be subjected to testing and the plurality of vehicle components to be subjected to testing, an airtightness correlation relationship between the train to be assembled and the plurality of vehicle components to be subjected to testing, the relationship determination module 320 is configured to:
determine, with reference to the equivalent leakage area relationship between each train to be subjected to testing and the plurality of vehicle components to be subjected to testing, that a negative correlation relationship exists between an airtightness index of the train to be assembled and an airtightness index of each of the vehicle components to be subjected to testing; and
establish, based on the negative correlation relationship, an airtightness correlation relationship between the train to be assembled and the plurality of vehicle components to be subjected to testing.

Further, when determining, based on an equivalent leakage area relationship between a train to be subjected to testing and the plurality of vehicle components to be subjected to testing, an airtightness correlation relationship between the train to be assembled and the plurality of vehicle components to be subjected to testing, the relationship determination module 320 is configured to:

The correlation relationship is:
$\frac{1}{{τ}_{whole train}} = \frac{1}{{τ}_{1}} + \frac{1}{{τ}_{2}} + \frac{1}{{τ}_{3}} + ⋯ + \frac{1}{{τ}_{n}} ;$
wherein τ_{whole train} is the airtightness index of the whole train to be assembled, and τₙ is the airtightness index of the n^{th} vehicle component to be subjected to testing.

Further, when selecting, with reference to a predicted airtightness range of each of the vehicle components to be subjected to testing, vehicle components to be assembled for assembling the train to be subjected to testing, and using the vehicle components to be assembled for assembly to obtain the train to be subjected to testing, the component selection module 340 is configured to:
select, with reference to the predicted airtightness range of each of the vehicle components to be subjected to testing and based on the factory parameters of each of the vehicle components to be subjected to testing, a plurality of candidate components; and
select, in combination with the structural analysis of the train to be assembled and factory parameters of the plurality of candidate components, the vehicle components to be assembled from the plurality of candidate components for assembling the train to be subjected to testing.

Further, when testing the actual airtightness index of the train to be subjected to testing, the airtightness test module 350 is configured to:
determine, based on a standard airtightness index of the train to be subjected to testing, a predetermined high air pressure value and a predetermined low air pressure value;
control an air pressure value of the train to be subjected to testing to reach the high air pressure value by supplying pressurized air into the train to be subjected to testing;
test the pressure reducing time taken when the air pressure value of the train to be subjected to testing is reduced from the high air pressure value to the low air pressure value; and
determine the actual airtightness index of the train to be subjected to testing based on the predetermined high air pressure value, the predetermined low air pressure value and the pressure reducing time.

In an apparatus for testing the airtightness of a train according to the embodiments of the present application, the train structure of the train to be assembled is analyzed, and the plurality of vehicle components to be subjected to testing that affect the airtightness of the train in the train to be assembled are determined; based on an equivalent leakage area relationship between a train to be subjected to testing and the plurality of vehicle components to be subjected to testing, the airtightness correlation relationship between the train to be assembled and the plurality of vehicle components to be subjected to testing is determined; based on a standard airtightness index of the train to be assembled and the factory parameters of each of the vehicle components to be subjected to testing, and in combination with the airtightness correlation relationship between the train to be assembled and the plurality of vehicle components to be subjected to testing, the predicted airtightness range of each of the vehicle components to be subjected to testing is determined; with reference to the predicted airtightness range of each of the vehicle components to be subjected to testing, the vehicle components to be assembled for assembling the train to be subjected to testing are selected, and the vehicle components to be assembled are used for assembly to obtain the train to be subjected to testing; the actual airtightness index of the train to be subjected to testing is tested; based on the actual airtightness index, whether the train to be subjected to testing meets the airtightness standard is determined; and if yes, the train to be subjected to testing that is obtained by assembly is determined to be the train to be operated, and the train to be operated is tested and operated. Thus, by imposing specific airtightness index requirements on a plurality of vehicle components that affect the airtightness of a train, the airtightness index of the whole train is controlled, thereby eliminating the step of manufacturing a prototype train, saving time and cost, and improving the accuracy of the train airtightness testing.

An embodiment of the present application further provides an electronic device, including: a processor, a memory and a bus, the memory storing machine-readable instructions executable by the processor, the processor and the memory being communicated through the bus when the electronic device runs, and the machine-readable instructions, when executed by the processor, performing the steps of the method for testing the airtightness of a train as described above.

Reference is made to FIG. 5 which is a schematic structural diagram of an electronic device according to an embodiment of the present application. As shown in FIG. 5, the electronic device 500 includes a processor 510, a memory 520 and a bus 530.

The memory 520 stores machine-readable instructions executable by the processor 510, the processor 510 and the memory 520 are communicated through the bus 530 when the electronic device 500 runs, the machine-readable instructions, when executed by the processor 510, can perform the steps of the method for testing the airtightness of a train according to the method embodiments shown in FIG. 1, and for specific implementations, reference can be made to the method embodiments, which are not repeated herein.

An embodiment of the present application further provides a computer-readable storage medium having a computer program stored thereon, and the computer program, when executed by a processor, can perform the steps of the method for testing the airtightness of a train according to the method embodiments shown in FIG. 1, and for specific implementations, reference can be made to the method embodiments, which are not repeated herein.

It can be clearly understood by persons skilled in the art that, for the purpose of convenient and brief description, for a detailed working process of the foregoing system, apparatus, and unit, reference can be made to a corresponding process in the foregoing method embodiments, and details are not repeated herein.

In several embodiments provided in the present application, it should be understood that the disclosed system, apparatus, and method can be implemented in other manners. The described apparatus embodiment is only exemplary. For example, the unit division is only logical function division and can be other division in actual implementation. For another example, a plurality of units or components can be combined or integrated into another system, or some features can be ignored or not performed. In addition, the displayed or discussed mutual couplings or direct couplings or communication connections can be implemented through some communication interfaces. The indirect couplings or communication connections between the apparatuses or units can be implemented in electronic, mechanical or other forms.

The units described as separate parts can or can not be physically separate, and parts displayed as units can or can not be physical units. They can be located in one position, or can be distributed on a plurality of network units. A part or all of the units can be selected according to an actual need to achieve the objectives of the solutions in the embodiments.

In addition, functional units in the embodiments of the present application can be integrated into one processing unit, or each of the units can exist alone physically, or two or more units are integrated into one unit.

When the functional unit is implemented in the form of a software functional unit and sold or used as an independent product, the functional unit can be stored in a non-volatile computer-readable storage medium executable by a processor. Based on such an understanding, the technical solutions of the present application essentially, or the part contributing to the prior art, or a part of the technical solutions can be implemented in the form of a software product. The computer software product is stored in a storage medium and includes several instructions for instructing a computer device (which can be a personal computer, a server, or a network device) to perform all or a part of steps of the methods described in the embodiments of the present application. The foregoing storage medium includes any medium that can store program codes, such as a universal serial bus (USB) flash disk, a removable hard disk, a read-only memory (ROM), a random access memory (RAM), a magnetic disk, or an optical disk.

Finally, it should be noted that the above embodiments are only specific implementations of the present application and used to illustrate the technical solutions of the present application, but not to limit them, and the protection scope of the present application is not limited thereto; although the present application is described in detail with reference to the above embodiments, those having ordinary skill in the art should understand that any person skilled in the art still can modify technical solutions recited in the aforesaid embodiments or easily envisage changes or equivalently replace partial technical features therein within the technical scope of the present application; and these modifications, changes or substitutions do not make essence of corresponding technical solutions depart from the spirit and scope of the technical solutions of the embodiments of the present application, and are intended to be covered by the protection scope of the present application. Therefore, the protection scope of the present application shall be subject to the protection scope of the claims.

## Claims

1. A method for testing airtightness of a train, **characterized in that** the testing method comprises:
analyzing a train structure of the train to be assembled and determining a plurality of vehicle components to be subjected to testing that affect the airtightness of the train in the train to be assembled;
determining, based on an equivalent leakage area relationship between a train to be subjected to testing and the plurality of vehicle components to be subjected to testing, an airtightness correlation relationship between the train to be assembled and the plurality of vehicle components to be subjected to testing;
determining, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing;
selecting, with reference to the predicted airtightness range of each of the vehicle components to be subjected to testing, vehicle components to be assembled for assembling the train to be subjected to testing, and using the vehicle components to be assembled for assembly to obtain the train to be subjected to testing;
testing an actual airtightness index of the train to be subjected to testing;
determining, based on the actual airtightness index, whether the train to be subjected to testing meets an airtightness standard; and
if yes, determining that the train to be subjected to testing that is obtained by assembly is a train to be operated, and testing and operating the train to be operated.

2. The testing method according to claim 1, wherein after the determining whether the train to be subjected to testing meets an airtightness standard, the testing method further comprises:
if no, determining, based on the actual airtightness index, the equivalent leakage area of the train to be subjected to testing;
determining, based on the equivalent leakage area and in combination with the factory parameters of each of the vehicle components to be subjected to testing, at least one vehicle component to be replaced that is airtightness-abnormal from the plurality of vehicle components to be subjected to testing; and
repeatedly testing the actual airtightness index of the train to be subjected to testing and replacing the at least one vehicle component to be replaced that is airtightness-abnormal, until the actual airtightness index of the train to be subjected to testing meets the airtightness standard, and obtaining the train to be operated.

3. The testing method according to claim 2, wherein the equivalent leakage area of the train to be subjected to testing is determined by the following formula: $\sqrt{\frac{{Δp}_{a}}{9.8}} - \sqrt{\frac{{Δp}_{b}}{9.8}} = 2 \frac{S}{V} {t}_{s} ;$ wherein S is the equivalent leakage area, V is a volume of the train, tₛ is a time difference before and after pressure release, and Δpₐ is an initial pressure difference; and Δp_{b} is a pressure difference after time tₛ.

4. The testing method according to claim 1, wherein the determining, based on an equivalent leakage area relationship between a train to be subjected to testing and the plurality of vehicle components to be subjected to testing, an airtightness correlation relationship between the train to be assembled and the plurality of vehicle components to be subjected to testing comprises:
determining, with reference to the equivalent leakage area relationship between each train to be subjected to testing and the plurality of vehicle components to be subjected to testing, that a negative correlation relationship exists between an airtightness index of the train to be assembled and an airtightness index of each of the vehicle components to be subjected to testing; and
establishing, based on the negative correlation relationship, the airtightness correlation relationship between the train to be assembled and the plurality of vehicle components to be subjected to testing.

5. The testing method according to claim 1 or 4, wherein the correlation relationship is: $\frac{1}{{τ}_{whole train}} = \frac{1}{{τ}_{1}} + \frac{1}{{τ}_{2}} + \frac{1}{{τ}_{3}} + ⋯ + \frac{1}{{τ}_{n}} ;$ wherein τ_{whole train} is the airtightness index of the train to be assembled, and τₙ is the airtightness index of the n^{th} vehicle component to be subjected to testing.

6. The testing method according to claim 1, wherein the selecting, with reference to the predicted airtightness range of each of the vehicle components to be subjected to testing, vehicle components to be assembled for assembling the train to be subjected to testing comprises;
selecting, with reference to the predicted airtightness range of each of the vehicle components to be subjected to testing and based on the factory parameters of each of the vehicle components to be subjected to testing, a plurality of candidate components to be assembled; and
selecting, in combination with attribute parameter information of each of candidate components to be assembled, the vehicle components to be assembled from the plurality of candidate components to be assembled for assembling the train to be subjected to testing.

7. The testing method according to claim 1, wherein the testing an actual airtightness index of the train to be subjected to testing comprises:
determining, based on a standard airtightness index of the train to be subjected to testing, a predetermined high air pressure value and a predetermined low air pressure value;
controlling an air pressure value of the train to be subjected to testing to reach the high air pressure value by supplying pressurized air into the train to be subjected to testing;
testing a pressure reducing time taken when the air pressure value of the train to be subjected to testing is reduced from the high air pressure value to the low air pressure value; and
determining the actual airtightness index of the train to be subjected to testing based on the predetermined high air pressure value, the predetermined low air pressure value and the pressure reducing time.

8. A apparatus for testing airtightness of a train, **characterized in that** the testing apparatus comprises:
an analysis module configured to analyze a train structure of the train to be assembled and determine a plurality of vehicle components to be subjected to testing that affect the airtightness of the train in the train to be assembled;
a relationship determination module configured to determine, based on an equivalent leakage area relationship between a train to be subjected to testing and the plurality of vehicle components to be subjected to testing, an airtightness correlation relationship between the train to be assembled and the plurality of vehicle components to be subjected to testing;
a range determination module configured to determine, based on a standard airtightness index of the train to be assembled and factory parameters of each of the vehicle components to be subjected to testing, in combination with the airtightness correlation relationship between the train to be assembled and the plurality of vehicle components to be subjected to testing, a predicted airtightness range of each of the vehicle components to be subjected to testing;
a component selection module configured to select, with reference to the predicted airtightness range of each of the vehicle components to be subjected to testing, vehicle components to be assembled for assembling the train to be subjected to testing, and use the vehicle components to be assembled for assembly to obtain the train to be subjected to testing;
an airtightness test module configured to test an actual airtightness index of the train to be subjected to testing;
a standard determination module configured to determine, based on the actual airtightness index, whether the train to be subjected to testing meets an airtightness standard; and
a test and operation module configured to determine, in response to the train to be subjected to testing meeting the airtightness standard, that the train to be subjected to testing that is obtained by assembly is a train to be operated, and test and operate the train to be operated.

9. An electronic device, **characterized by** comprising: a processor, a memory and a bus, the memory storing machine-readable instructions executable by the processor, the processor and the memory being communicated through the bus when the electronic device runs, and the machine-readable instructions, when executed by the processor, performing the steps of the method for testing the airtightness of a train according to any one of claims 1 to 7.

10. A computer-readable storage medium, **characterized in that** a computer program is stored on the computer-readable storage medium, and the computer program, when executed by a processor, performs the steps of the method for testing the airtightness of a train according to any one of claims 1 to 7.
